(19) Europäisches Patentamt
European Patent Office
Office européen des brevets

(11) **EP 1 940 975 B1**

(12) **EUROPEAN PATENT SPECIFICATION**

(45) Date of publication and mention
of the grant of the patent:
**04.04.2012 Bulletin 2012/14**

(51) Int Cl.:
*C09D 175/04* (2006.01)    *C09D 133/06* (2006.01)
*C09D 5/02* (2006.01)    *C09D 5/00* (2006.01)
*C08G 18/80* (2006.01)    *C08G 18/62* (2006.01)
*B05D 7/14* (2006.01)    *B05D 7/00* (2006.01)

(21) Application number: **06816676.8**

(22) Date of filing: **10.10.2006**

(86) International application number:
**PCT/US2006/039644**

(87) International publication number:
**WO 2007/044767 (19.04.2007 Gazette 2007/16)**

(54) **METHOD OF FORMING A MULTI-LAYER COATING ON AUTOMOBILE BODIES WITHOUT A PRIMER BAKE**

VERFAHREN ZUR HERSTELLUNG EINER MEHRSCHICHTIGEN LACKIERUNG AUF AUTOMOBILKAROSSERIEN OHNE EINBRENNEN DES GRUNDIERMITTELS

PROCEDE DE FORMATION D'UN REVETEMENT MULTICOUCHE SUR DES CARROSSERIES D'AUTOMOBILE, SANS CUISSON DE LA COUCHE D'APPRET

(84) Designated Contracting States:
**BE DE FR GB**

(30) Priority: **07.10.2005 US 725012 P**

(43) Date of publication of application:
**09.07.2008 Bulletin 2008/28**

(73) Proprietor: **E.I. DU PONT DE NEMOURS AND COMPANY**
**Wilmington, DE 19898 (US)**

(72) Inventors:
• **HAZAN, Isidor**
**Miami Beach, Florida 33139 (US)**
• **JOHNSON, Jeffery, W.**
**Rochester, Michigan 48306 (US)**
• **MATHESON, Robert, R.**
**Glen Allen, VA 23059 (US)**
• **TRINDADE, Delson, J.**
**Rochester Hills, Michigan 48306 (US)**

(74) Representative: **DuPont Performance Coatings Biering/Blum/Kimpel**
**Patentabteilung 102 JL**
**Christbusch 25**
**42285 Wuppertal (DE)**

(56) References cited:
**EP-A- 1 306 399**    **EP-A1- 0 158 161**
**EP-A1- 0 285 034**    **EP-A1- 0 385 527**
**EP-A2- 0 893 483**    **WO-A-00/63310**
**WO-A-01/48097**    **US-A1- 2005 161 330**

Remarks:
The file contains technical information submitted after the application was filed and not included in this specification

## Description

The invention concerns the use of a primer coating composition in a method of forming a multi-layer coating on an automotive body and in particular the use of a primer coating composition in a method of forming multi-layer coating films with which a good finished appearance can be obtained by baking the primer, basecoat, and clearcoat layers at the same time. The primer composition has excellent resistance to interfacial bleeding with the top coated film.

## BACKGROUND OF THE INVENTION

Coating systems for automobiles normally comprise a multiplicity of coatings applied to a steel substrate. Typically, the steel is treated with a rust-proofing phosphate layer, then a cathodic electrocoat primer for additional corrosion protection is applied. A primer-surfacer (also known as a chip resistant primer, primer, or primer filler) is used next to smooth the surface for topcoating and also to provide stone chipping resistance to the coating system during the normal course of driving. Then a top-coat system is applied, sometimes as a single colored coat, more often now as a basecoat with solid color or flake pigments followed by a transparent protective clear coat, to protect and preserve the attractive aesthetic qualities of the finish on the vehicle even on prolonged exposure to the environment or weathering.

Coating film formation of the basecoat and the clearcoat is normally achieved by wet-on-wet application, which is to say that the clearcoat is applied to the basecoat without baking the basecoat prior to clearcoat application (although the basecoat may be flash dried for a short period of time at room temperature prior to clearcoat application), and then subsequently baking the basecoat and clearcoat at the same time to form a dried and cured finish. In the conventional method for forming the multi-layer coating film, the underlying primer surfacer layer, however, is baked before being topcoated with basecoat and clearcoat. Historically, baked primers have been used not only to provide a smooth surface on which to apply the topcoat, but also to also prevent interfacial bleeding or intermixing with the overlying basecoat and avoid disrupting the appearance of the overall topcoat finish. Resistance to intermixing (sometimes referred to as "strike-in" resistance) is especially important for the appearance of glamour metallic finishes which are very popular nowadays on automobiles and trucks. Any disturbance of the metallic pigment flake orientation in metallic basecoats after application over the primer-surfacer will detract from the metallic effect of the finish. Therefore, care must be taken to ensure that the metal pigment flakes are not disturbed after painting.

In recent years, it has also been strongly desired to reduce the environmental load or impact of automotive assembly plants by reducing VOC (volatile organic compounds) emissions and $CO_2$ (carbon dioxide) emissions generated from operating painting booths and baking ovens. This has led to use of lower solvent content in the paint and the development of three-layer wet paint systems which make it possible to apply a primer surfacer, basecoat and clearcoat wet-on-wet continuously before they are cured all at once in a single bake. With this simplified application process, it is possible to eliminate the separate primer painting booth and primer oven, which also results in substantial cost savings to the automobile manufacturers. The technical hurdles of this process simplification, however, have been significant. For instance, interfacial bleeding and aesthetic appearance, as well as film properties such as chip resistance are still significant concerns.

Attempts have been made to address the forgoing problems by modifying the formulation of the primer coating material. For instance, U.S. Patent No. 6,863,929 of Watanabe et al. describes a method for forming a multilayer automotive coating film using a three layer wet paint process (also referred to as a "3 wet" or a 3-coat-1-bake" process) wherein a standard polyester-melamine primer coating is formulated to also contain acrylic polymer particles, namely in the form of internally crosslinked nonaqueous dispersion (NAD) polymers or internally crosslinked microgel particles. These particles are intended to raise the viscosity and solubility parameter between the primer surfacer and the base coating to prevent intermixing at the interface between the coated layers. However, use of such particle-filled systems also suffers from some drawbacks.

For example, the microparticles also tend to create voids in the surface of the wet primer where the basecoat can still flow in and intermix, resulting in defects in the aesthetic appearance such as loss of smoothness, gloss, head on brightness, and/or metallic effect. Sagging of these coatings, especially on vertical panels, such as doors, fenders, rocker panels, etc, is also a problem. These particle-filled systems are also not able to maintain dry film builds at normal commercial levels. Film builds must therefore be reduced to allow the NAD or microgel particle to migrate to the interface. Yet, thin films are an impediment as they tend to subject the underlying corrosion-protective electrocoated primer layer to excessive UV light transmission and deterioration. Thin films or thin film regions are also inadequate for mechanical properties and visual appearance of the overall finish.

Therefore, there is still a need to find a more effective way to prevent the inter-mixing of the primer surfacer and basecoat and clearcoat layers when applied in a wet on wet on wet (i.e., a 3 wet) manner and make it possible to eliminate the primer baking process and reduce the environmental impact of the coating system, while also maintaining film builds, the overall appearance such as high gloss and distinctness of image and film properties of the coating system.

EP-0 893 483 A2 discloses a primer composition comprising a film-forming polymer resin and a crosslinker for said resin, a catalyst, U.V. light-blocking pigments, and polymer microgel particles. The polymer microgel particles may be crosslinked acrylic resin particles. The primer may be applied by the wet-on-wet method of forming a multi-layered coating on a substrate, whereby the primer is applied on the substrate, followed by wet-on-wet application of one or more top coat compositions and joint curing of the primer and the top coat(s). A color basecoat and a clearcoat represent a typical example of a two-layer topcoat.

US 2005/0161330 A1 discloses a process for forming a multi layer coated film comprising forming a cured electrodeposition coated film on which an intermediate coating composition, a base top coating composition and a clear top coating composition are applied wet-on-wet-on-wet and the three uncured coating layers so applied are then simultaneously heated and cured. The cured electrodeposition coated film has a centerline average roughness (Ra) of 0.05 to 0.25 $\mu$m obtained from a roughness curve and a centerline average roughness (Pa) of 0.05 to 0.30 $\mu$m obtained from a profile curve.

EP-0 158 161 A1 discloses the preparation of a hydroxyl-functional acrylic polymer obtained by copolymerization of 10 to 60 % by weight of hydroxy alkyl (meth)acrylates having 2 to 14 carbon atoms in the alkyl residue, 3 to 25 % by weight of monomers with at least two polymerizable, olefinically unsaturated double bonds and 15 to 82 % by weight of further polymerizable monomers having an olefinically unsaturated double bond, wherein the sum of the weight percent totals 100 % by weight. The hydroxyl-functional acrylic polymer may be used as a binder resin of a coating composition. EP-0 158 161 A1 does not disclose a method of producing a multi-layer coating composition by sequentially applying a layer of a primer coating composition, a layer of a basecoating, and a layer of a clearcoating composition, followed by simultaneously baking the applied three coating layers.

EP-0 285 034 A1 discloses a curable composition consisting of a polymer with at least two carboxyl groups, a polymer with at least two epoxy groups, and an aminoplast resin, wherein at least one of the polymers is a branched acrylic copolymer comprising 3 to 30 weight % of a comonomer with at least two polymerizable, olefinically unsaturated double bonds, and wherein the molar ratio between the carboxyl and the epoxy groups is 3:1 to 1:3. The curable composition may be used as binder/crosslinker system of a coating composition. EP-0 285 034 A1 does not disclose a method of producing a multi-layer coating composition by sequentially applying a layer of a primer coating composition, a layer of a basecoating, and a layer of a clearcoating composition, followed by simultaneously baking the applied three coating layers.

The present invention has the aforementioned desirable characteristics.

## SUMMARY OF THE INVENTION

Disclosed herein is the use of a primer coating composition in a method for forming a multi-layer coating comprising sequentially applying a layer of a primer coating composition, applying a layer of a base coating composition, and applying a layer of a clear coating composition on an automobile body; and simultaneously curing the applied three layers by baking, wherein the primer coating composition comprises: a film forming binder and an organic liquid carrier and optionally pigment in a pigment to binder weight ratio of 1:100-150:100; and the binder contains:

(a) 40 to 95% by weight, based on the weight of the binder, of a branched acrylic polymer having a hydroxyl monomer content of 1 to 65% by weight and a weight average molecular weight of 10,000 to 150,000; and

(b) 5 to 60% by weight, based on the weight of the binder of a crosslinking agent selected from the group consisting of an aminoplast resin, a blocked polyisocyanate resin, or a mixture thereof, and

wherein the following conditions are met:

(i) the branched acrylic polymer is prepared by a solution polymerization method in which the monomers are blended with a liquid reaction medium and a free radical polymerization initiator, and heated to at least 130 °C for a sufficient time to form a branched polymer that is substantially free of crosslinking and that has a measurable intrinsic viscosity when dissolved in a suitable solvent for the polymer,

(ii) the branched acrylic polymer is composed of at least two ethylenically unsaturated monomers at least one having said hydroxyl content and the other having no hydroxyl content,

(iii) the branched acrylic polymer is composed of at least one monoacrylic monomer, at least one diacrylic or dimethacrylic monomer, and optionally additionally at least one monomethacrylic monomer, provided that the at least one monomethacrylic monomer does not exceed 40% by weight of the total reaction mixture, and

(iv) the monomer mixture contains no more than 30% by weight diacrylic and/or dimethacrylic monomers in total.

## BRIEF DESCRIPTION OF THE DRAWINGS

FIG. 1 is a schematic diagram of a three-layer wet paint application process in accordance with the present invention.

FIG. 2 is a schematic diagram of a conventional automotive coating process that requires a separate primer spray booth and primer baking process.

## DETAILED DESCRIPTION OF THE INVENTION

The present invention now provides the use of a primer coating composition in a method for forming a multi-layered coating, which is capable of controlling intermixing of adjacent paint layers, and interfacial bleeding, and inversion at the interface between each coated layer when a primer coating, a base coating, and a clear coating are applied sequentially over each other in a wet-on-wet (i.e., wet-on-wet-on-wet) manner on an automobile body substrate before being baked together, while still meeting today's performance requirements such as good appearance, chip performance, and film builds.

More particularly, the present invention provides the use of a primer coating composition in a method for forming a multi-layer coating comprising sequentially applying a primer coating composition layer, a base coat composition layer, and a clear coat composition layer on an automobile body substrate and simultaneously curing the applied three layers by baking, wherein the primer coating composition comprises: a film-forming binder and an organic liquid carrier, and optionally, but preferably, pigment(s); wherein the binder contains:

(a) 40 to 95% by weight, based on the weight of the binder, of branched acrylic polymer as the interfacial control polymer having a hydroxyl monomer content of 1 to 65% by weight, and a weight average molecular weight of 10,000 to 150,000; and

(b) 5 to 60% by weight, based on the weight of the binder of a crosslinking agent selected from the group consisting of aminoplast resin, blocked polyisocyanates, or mixtures thereof.

The behavior of the primer defined above allows for high film builds, excellent appearance such as high gloss, distinctness of image, and desired visual (such as metallic or pearlescent) effect, and excellent chip resistance (a minimum rating of 5 using SAE J-400), despite the absence of a primer bake.

The invention is especially useful for finishing the entire exterior body of automobiles and trucks and parts thereof.

In this disclosure, a number of terms and abbreviations are used. The following definitions are provided.

"Wet-on-wet" means that an overlying coat is applied to an underlying coat without curing (i.e., baking) or completely drying the underlying coat.

"Wet-on-wet on-wet", also used interchangeably herein with "three layer wet", "3 wet", and "3-coat-1-bake", means that the primer layer, basecoat layer, and clearcoat layer are applied successively in a wet-on-wet manner.

"Essentially free" with respect to the primer coating shall mean that the primer coating composition contains less than 1% by weight, preferably zero percent by weight, of the specified component, based on the total weight of the composition.

"High solids composition" means a low solvent solvent-borne liquid coating composition having a total solids content at time of application of at least 40 percent, preferably in the range of from 40-70 percent, in weight percentages based on the total weight of the composition. It should be understood that "total solids" refers to the total amount of non-volatile components in the composition even though some of the components may be non-volatile liquids rather than solids at room temperature.

"Non-gelled" or "substantially non-gelled" refers to reaction products that are substantially free of crosslinking and that have a measurable intrinsic viscosity when dissolved in a suitable solvent for the polymer. As is well known in the art, the intrinsic viscosity of a polymer is determined by plotting the reduced viscosity versus the concentration and extrapolating to zero concentration. A gelled reaction product is essentially of infinite molecular weight and will often have an intrinsic viscosity that is too high to measure.

"Low VOC composition" means a coating composition that has less than 0.6 kilogram of organic solvent per liter (5 pounds per gallon) of the composition, preferably in the range of less than 0.42 kilogram of organic solvent per liter (3.5pounds per gallon), as determined under the procedure provided in ASTM D3960.

The invention is based on the discovery that use of certain relatively high molecular weight functionalized branched acrylic polymers in the primer composition, which serve as interfacial control polymers, enables the composition to effectively prevent intermixing of the primer and basecoating layers when the basecoat which follows is applied over the primer in a wet on wet manner, while still providing an aesthetic appearance and film properties such as chip resistance and solids content and film builds equal to that of conventional baked primers.

Primer Coated Layer

In the present method for forming a multi-layer coating film, a primer surfacer coating composition having the ability to prevent inter-mixing of the top coated layer when applied wet-on-wet thereover is employed. This primer surfacer, primer filler, or chip resistant primer, hereinafter "primer", can be used in the three layer wet paint method described herein without sacrificing good finished appearance and good chip performance and good film builds.

The solvent-borne primer composition is not only useful in a wet-on-wet application process, can be formulated to have a low VOC content (volatile organic content), can be formulated into a gray or colored composition that is easy to hide, forms finishes that are hard but still flexible, has excellent adhesion to a variety of substrates such as cold rolled steel, phosphatized steel, phosphatized steel primed with an electrocoat primer applied by electrocoating, plastic substrates which may be preprimed or unprimed such as polyester reinforced fiber glass, reaction injection molded urethanes, partially crystalline polyamides and other plastic substrates and provides a surface to which conventional topcoats will adhere.

The primer composition is particularly useful on the aforementioned substrates since it can be used as a surfacer or filler to cover imperfections in surfaces of primed metal and plastic substrates. For example, electrocoating of metal substrates with a primer often results in a finish that has small imperfections and this composition can be applied to form a smooth, glossy finish that is free from imperfections. Also, plastic substrates such as SMC (sheet molding compound) which is a polyester reinforced with fiber glass contains many surface imperfections and must be coated with a surfacer.

The primer composition generally contains a film forming binder and a volatile organic liquid carrier, which usually is a solvent for the binder. It is generally desired that the composition be formulated as a low VOC composition. Accordingly, for low VOC compositions, the primer composition typically has a film forming binder content of 40-85% by weight and correspondingly 15-60% by weight of volatile organic liquid carrier. Generally, the composition also contains pigments in a pigment to binder weight ratio of 1:100-150:100.

As indicated above, the film-forming portion of the primer composition is referred to as the "binder" or "binder solids". The binder generally includes all the film-forming components that contribute to the solid organic portion of the cured composition. Generally, catalysts, pigments, and non-polymeric chemical additives such as stabilizers described hereinafter are not considered part of the binder solids. Non-binder solids other than pigments usually do not amount to more than 5-15% by weight of the composition. In this disclosure, the term "binder" or "binder solids" refers to the film-forming branched acrylic polymer, the melamine or polyisocyanate crosslinking agent, and all other optional film-forming components, as are further described hereinbelow.

In a preferred embodiment, the binder or film forming constituent used in the composition generally comprises 40-95% by weight of the aforesaid substantially non-gelled, branched acrylic polymer, which is sometimes referred to herein as "highly branched" or "hyper branched" acrylic polymer, and 5-45% by weight of an aminoplast resin cross-linking agent. It should be understood that a blocked polyisocyanate crosslinking agent can be used to replace some portion or all of the aminoplast, if desired. Blocked polyisocyanates are however known to increase the overall cost of the composition and therefore are less desirable. For most uses, the composition typically contains 65-75% by weight of branched acrylic polymer and 25-35% by weight of aminoplast resin cross-linking agent.

In general, the branched acrylic polymer has a Mw (weight average molecular weight) of 10,000 to 150,000, more preferably in the range from 30,000 to 120,000, and a hydroxyl monomer content of 1 to 65% by weight.

All molecular weights described herein are determined by gel permeation chromatography using polystyrene as the standard.

While not wishing to be bound by theory, the inclusion of the forgoing acrylic polymer is believed to act as an interfacial control polymer and thus prevent intermixing of the wet primer and basecoating layers by (1) decreasing permeability of the primer enough to prevent bleeding, but still maintaining sufficient low viscosity so as to enable easy application such as by spraying, without the need to employ appreciable amount of volatile solvents, and/or by (2) choosing a chemistry, primarily acrylic chemistry, that is preferably immiscible with the layer that follows which is the basecoat layer.

The branched acrylic polymer is generally composed of at least two types of ethylenically unsaturated monomers, namely 1) at least one monoacrylic monomer and at least one diacrylic or dimethacrylic monomer. Optionally the polymer may additionally contain 3) at least one monomethacrylic monomer, provided that it does not exceed 40% by weight of the total reaction mixture. In a preferred embodiment, the monomer mixture contains no more than 30% by weight diacrylic and/or dimethacrylic monomers in total, to minimize gel formation under the above described reaction conditions.

A portion of the ethylenically unsaturated monomer structures mentioned above also contains a hydroxyl group. Examples of hydroxyl containing monoethylenically unsaturated monomers that can be used to introduce such hydroxyl groups are hydroxyalkyl acrylates and hydroxyalkyl methacrylates such as: 2-hydroxyethyl acrylate, 2-hydroxypropyl acrylate, 3-hydroxypropyl acrylate, 4-hydroxybutyl acrylate, 2-hydroxyethyl methacrylate, 2- hydroxypropyl methacrylate, 3-hydroxypropyl methacrylate, and 4-hydroxybutyl methacrylate. The amount of hydroxyl functionality may vary, depending on the final properties desired. Up to 65% by weight of the monomer mixture contains hydroxyl functionality to allow the polymer to have the desired crosslinking functionality.

Typically, the remainder of the ethylenically unsaturated monomers in the monomer mix will be non-functional monomers containing no carboxylic acid groups, hydroxyl groups or other reactive or crosslinkable functional groups.

Examples of non-functional monoacrylic and methacrylic monomers are alkyl acrylates and methacrylates such as: methyl acrylate, ethyl acrylate, propyl acrylate, isopropyl acrylate, butyl acrylate, isobutyl acrylate, hexyl acrylate, 2-ethylhexyl acrylate, nonyl acrylate, lauryl acrylate, stearyl acrylate, cyclohexyl acrylate, isodecyl acrylate, propyl acrylate, phenyl acrylate, isobornyl acrylate, methyl methacrylate, ethyl methacrylate, butyl methacrylate, t-butyl methacrylate, hexyl methacrylate, 2-ethylhexyl methacrylate, nonyl methacrylate, lauryl methacrylate, stearyl methacrylate, cyclohexyl methacrylate, isodecyl methacrylate, propyl methacrylate, phenyl methacrylate, isobornyl methacrylate and the like, or other constituents such as styrene or substituted styrene, such as methyl styrene, acrylonitrile, and methacrylonitrile, acryamide, and methacrylamide, and the like.

Examples of di acrylic and methacrylic monomers for use as a comonomer in the monomer mix to impart branching are diesters of acrylic and methacrylic acids, such as: ethylene glycol dimethacrylate and diacrylate, diethyleneglycol dimethacrylate and diacrylate, triethyleneglycol dimethacrylate and diacrylate, 1,3-propanediol dimethacrylate and diacrylate, 1,4-butanediol diacrylate, 1,6-hexanediol diacrylate, 2,2-dimethylpropanediol diacrylate, tripropylene glycol dimethacrylate and diacrylate, 1,3-butylene glycol dimethacrylate and diacrylate. Urethane diacrylates and dimethacrylates can also be used, since they impart in coating applications, increased flexibility to the cured coating layer and reduced brittleness, when used in the correct proportion with the other essential ingredients in coating applications. The urethane monomers can be produced by any of the methods known to those skilled in the art. Two typical methods are 1) reacting a diisocyanate with a hydroxy-containing acrylate or hydroxy-containing methacrylate, such as 2-hydroxyethyl acrylate or 2-hydroxyethyl methacrylate; and 2) reacting an isocyanatoalkyl acrylate or an isocyanatomethacrylate with a suitable diol. Some of the diethylenically unsaturated monomers, as can be seen from the list of these monomers above, may also contain a functional group, such as any of those listed above, to impart crosslinking functionality to the polymer.

As mentioned above, the polymer may also contain some monomethacrylic monomers. However, when such monomers are employed in the free-radical polymerization reaction, it is desired that the total amount of monomethacrylic monomers in the monomer mixture should not exceed approximately 40% by weight. Higher amounts can be used but at amounts exceeding 40% by weight, such monomers begin to interfere with the branching mechanism (or so-called "backbiting" described hereafter) and thus result in a polymer of a lower degree of branching, as demonstrated by a sharp rise in viscosity, which is undesirable. The products formed at such concentrations are quite viscous and difficult to handle.

In addition, among the mono acrylic and methacrylic monomers listed above, it is generally desired to include (up to 70% by weight of the monomer mixture) of at least one bulky monomer selected from the group consisting of isobornyl (meth)acrylate, butyl (meth)acrylates (all isomers), ethyl hexyl(meth)acrylate (all isomers), cyclohexyl(meth) acrylate, or mixture of these monomers, preferably to increase the intermixing or strike-in resistance of the coating composition with overlying coating layers applied wet-on-wet thereover.

Also, since the intended end use of the branched polymer product is in a high solids primer coating composition, the amount of diacrylic or dimethacrylic monomer(s) will generally not exceed 30% by weight of the total monomer mixture to avoid gelation, although this may vary depending on the particular diacrylic or dimethacrylic monomers employed, as well as the composition of the monomer mixture.

In a preferred embodiment, the branched acrylic polymer is composed of polymerized monomers of a first acrylate monomer which is either isobornyl acrylate, butyl acrylate (all isomers), ethyl hexyl acrylate (all isomers), or cyclohexyl acrylate, or mixture of these monomers, and a second methacrylate or acrylate monomer which is a hydroxy alkyl methacrylate or acrylate that has 1-4 carbon atoms in the alkyl group or mixtures of these monomers, and a diacrylate or dimethacrylate monomer or a mixture of these monomers.

One especially preferred branched acrylic polymer contains 40-98% by weight of the first acrylate, 1-30% of the second acrylate or methacrylate, and 1-30% by weight of the diacrylate or dimethacrylate. Of course, the total percentage of monomers in the polymer equal 100% and therefore if an amount equal to or approaching the maximum of one particular monomer is employed, then the relative amounts of the remaining monomers must be reduced accordingly.

One particularly preferred branched acrylic polymer contains the following constituents in the above percentage ranges: isobornyl acrylate, hydroxy ethyl methacrylate, and 1,6-hexanediol diacrylate.

The branched acrylic polymer can be prepared by a variety of solution polymerization methods in which the monomers are blended with a liquid reaction medium, a free radical polymerization initiator, and optionally a chain transfer agent, and heated to a relatively high temperature of typically at least 130 °C, preferably at least 150 °C, more preferably at least 160 °C, for a sufficient time, as will be apparent to those skilled in the art, typically for 2 to 8 hours to form a substantially non-gelled branched polymer. In general, at temperatures below 130 °C, the amount of internal crosslinking increases and relative amount of by-products increases. Furthermore, at too low a reaction temperature, the viscosity of the reaction mixture rapidly increases to a point where the reaction mixture is too viscous to be stirred and the reaction is then difficult to control and must be terminated.

As indicated above, the free radical polymerization portion of the process to form the branched acrylic polymer backbone may be carried out utilizing conventional techniques, such as by heating the monomers in the presence of initiators and/or catalysts and varying solvents, with the proviso that the reaction temperature during polymerization must be high enough (i.e., generally above 130 °C) to induce branching without causing the polymer to gel.

While not wishing to be limited by any particular mechanism, it is believed that the high temperature free-radical polymerization process involves so-called "backbiting" which prevents gelation of the monomer mixture. In the polymerization process described, it is believed that abstraction of a methine backbone hydrogen occurs to give a tertiary radical which leads to formation of a branching point and ultimately a branched polymer through subsequent monomer addition. Abstraction of the hydrogen from the backbone is believed to occur by intramolecular chain transfer, or so-called backbiting, which best accounts for the observed branching, as opposed to formation of a gelled polymer, as would be expected to normally occur in classical free radical polymerization that utilizes greater than insignificant amounts of diacrylate or dimethacrylate monomers. Such backbiting reactions in high temperature acrylate polymerization are described more fully in Peck and Grady, Polym. Preprints, 2002, 43(2), 154, hereby incorporated by reference.

It has been unexpectedly observed that even in the presence of diacrylic or dimethacrylic monomers, higher reaction temperatures favor this backbiting, with little or no gelled polymer being formed. It was previously thought that the presence of large amounts of diacrylic or dimethacrylic monomers in the reaction mixture would cause the reaction mixture to gel. The process therefore employs rather high reaction temperatures to increase the incidence of backbone hydrogen abstraction and increase the incidence of branching. Increasing the number of branching points on a polymer chain leads to lower viscosity. It is well known that the inherent viscosity of branched polymers is lower than for corresponding linear polymers of equal molecular weight, which allows the branched polymer so formed to be used in a high solids coating with viscosity low enough for practical application such as by spraying.

The free radical polymerization is preferably carried out in the presence of a free radical polymerization initiator, typically, tertiary butyl perbenzoate, tertiary butyl peroctoate, cumene hydroperoxide, benzoyl peroxide, di-tertiary butylperoxide, di-cumene peroxide, methyl ethyl ketone peroxide or similar peroxygen compounds, or an azo compound such as azobisisobutyronitrile is employed. The amount of free radical polymerization initiator can be varied depending upon the desired molecular weight but 0.05-8 % by weight based on the weight of total polymerizable monomer is typical. A preferred range is from 0.05 to 4 percent by weight. A mixture of two or more initiators may be used.

A solvent is not essential but is preferably used as the liquid reaction medium. The solvent can be used as from 0 to 75% of the total reaction mixture. Any of the conventional polymerization solvents may be utilized in the present high temperature process to prepare the branched acrylic polymers. The higher boiling solvents are preferred due to their low vapor pressure at the high temperature required to induce branching. In general, solvents having a boiling point above 100 °C., especially 150 °C. are most preferred. Examples of such higher boiling solvents include esters and mixed ethers and esters, Cellosolve (registered trademark of the Union Carbide Corporation), butyl Cellosolve, Cellosolve acetate, the Carbitols (registered trademark of the Union Carbide Corporation), the (poly) alkylene glycol dialkyl ethers and the like. Any solvent is acceptable as long as the functionality of the solvent does not interfere with the monomer functionality. The reaction may also be run under pressure so that the boiling point of a low boiling solvent can be increased to temperatures desired to produce the polymers of the present invention.

Further, various hydrocarbon fractions may be utilized with the most preferred being Solvesso 150 or Solvesso 100 (a registered trademark of the Exxon Mobil Oil Company). Aromatic solvents can also be employed, for example, toluene, xylene, cumene, and ethyl benzene. Special care is exercised when functional solvents are desired.

In any of the processes described above, polymerization is preferably continued until the resulting film-forming branched polymer has the desired molecular weight and requisite branching and desired intermixing and strike-in resistance but still sufficiently low viscosity for use in the primer coating composition.

In addition to the above film-forming branched acrylic resin component, the primer composition also contains, as part of the film-forming binder, a crosslinking agent. The crosslinking agent used in the composition is an aminoplast resin or blocked polyisocyanate resin or mixture of the two. Aminoplasts resins such as melamine formaldehyde condensates are generally preferred. In general, aminoplast resins are aldehyde condensation products of melamine, urea, benzoguanamine, or a similar compound. Usually, the aldehyde employed is formaldehyde, although useful products can be made from other aldehydes, such as acetaldehyde, crotonaldehyde, acrolein, benzaldehyde, furfural, and others. Condensation products of melamine or urea are the most common and are preferred, but products of other amines and amides in which at least one amine group is present can also be employed.

Of the melamine condensates, monomeric or polymeric melamine formaldehyde condensate resins that are partially or fully alkylated are generally preferred. These preferred resins are organic solvent-soluble and are commercially available under the tradename Cymel ® from Cytec Industries, Inc., West Patterson, New Jersey. One preferred crosslinking agent is a methylated and butylated or isobutylated melamine formaldehyde resin that has a degree of polymerization of about 1-3. Generally, this melamine formaldehyde resin contains about 50% butylated groups or isobutylated groups and 50% methylated groups. Another preferred melamine, for a good balance of properties is, a fully butylated resin known as Cymel 1156®.

Other possible crosslinking agents, of course, can also be used, such as urea formaldehyde, benzoguanamine formaldehyde and blocked or unblocked polyisocyanates or compatible mixtures of any of the forgoing crosslinkers.

For instance, the aminoplast crosslinking agent(s) described above can be substituted for or optionally combined with any of the conventional blocked polyisocyanate crosslinking agents for enhanced film properties. Typical blocking agents are alcohols, ketimines, oximes, pyrazoles and the like.

Typical examples of polyisocyanates are isocyanate compounds having 2 to 4 isocyanate groups per molecule, such as 1,6-hexamethylene diisocyanate, isophorone diisocyanate, 2,4-toluene diisocyanate, diphenylmethane-4,4'-diisocyanate, dicyclohexylmethane-4,4'-diisocyanate, tetramethylxylidene diisocyanate, and the like. Polyisocyanates having isocyanurate structural units can also be used such as the isocyanurate of hexamethylene diisocyanate which is available under the tradename Desmodur N-3390® from Bayer Corporation of Pittsburgh, Pennsylvania, the isocyanurate of isophorone diisocyanate (isocyanurate) which is available under the tradename Desmodur Z-4470® from Bayer Corporation and the like.

Polyisocyanate functional adducts can also be used that are formed from any of the forgoing organic polyisocyanate and a polyol. Polyols such as trimethylol alkanes like trimethylol propane or ethane can be used. One useful adduct is the reaction product of tetramethylxylidene diisocyanate and trimtheylol propane and is available under the tradename of Cythane 3160®. When the crosslinkable resin is used in exterior coatings, the use of an aliphatic or cycloaliphatic isocyanate is preferable to the use of an aromatic isocyanate, from the viewpoint of weatherability and yellowing resistance. An example of a suitable blocked isocyanate that can be used in the present system is a pyrazole blocked polyisocyanate of 1,6-hexamethylene diisocyanate which is available from Bayer Corporation.

Optionally, in addition to the above film-forming binder constituents, the composition may also contain, as part of the film forming binder, other film-forming binder resins and/or crosslinking resins, such as acrylic resins, acrylourethane resins, alkyd resins, epoxy resins, polyester resins, polyester urethane resins, and the like. However, as indicated above, the composition should be totally free or essentially free of crosslinked microgel resin particles based on, for example, acrylic microgels, and crosslinked NAD resin particles, based on, for instance, acrylic NADs, as part of the film-forming binder. If the overlying basecoating layer is formed from a polyester based coating composition (e.g., a standard polyester-melamine base coating), it is generally desired that the primer composition also be free of any of the aforesaid polyester binder resins, in order to further raise the solubility parameter between the two layers.

Besides the film-forming binder constituents, the coating composition may also include minor amounts of non-binder solids. Generally, catalysts, pigments, or chemical additives such as stabilizers are not considered part of the binder solids. Non-binder solids other than pigments, as indicated above, usually do not amount for more than 5-15% by weight of the composition. Such additional additives will, of course, depend on the intended use of the coating composition.

For instance, to increase the rate of crosslinking of the composition on curing, a catalyst can be added to the composition. Generally, 0.1-6% by weight, based on the weight of the binder, of catalyst is used. Typical of such catalyst are blocked acid catalysts. Typically useful blocked acid catalysts are aromatic sulfonic acids blocked with amino methyl propanol or dimethyl oxazoline. Typically useful aromatic sulfonic acids are para toluene sulfonic acid, dodecyl benzene sulfonic acid, decyl benzene sulfonic acid. One preferred catalyst is dodecyl benzene sulfonic acid blocked with amino methyl propanol.

To improve the outdoor weatherability of the composition and protect the coated substrate from premature degradation, the composition typically contains 0.01-2% by weight, based on the weight of the binder, of ultraviolet light stabilizers which term includes ultraviolet light absorbers, screeners and quenchers. Typical ultraviolet light stabilizers include benzophenones, triazines, triazols, benzoates, hindered amines and blends of thereof.

Typical pigments that can be used in the composition are filler pigments such as talc, china clay, barytes, carbonates, silicates, and color pigment such as metallic oxides such as titanium dioxide, zinc oxide and iron oxide and carbon black and organic colored pigments and dyes. The resulting primer composition has a pigment to binder weight ratio of 1:100-150:100.

The pigments can be introduced into the primer composition by first forming a mill base with an acrylic copolymer dispersant or with another compatible polymer or dispersant by conventional techniques such as sand grinding, ball milling or attritor grinding. The mill base is blended with other constituents used in the composition.

In general, a gray color primer prepared by using carbon black and titanium dioxide as main pigments is typically employed. However, various color pigments may be employed to provide various colors for example that having a hue similar to that of the colored basecoat layer that is subsequently applied directly thereover. This is done to enable the colored basecoat to achieve complete hiding at the lowest possible film build. In addition, it is generally desirable to include small amounts of talc in the composition to improve the chipping resistance of the coating film.

As to the liquid carrier, any of the conventional organic solvents or blends of solvents can be used to form the primer composition provided that the selection of solvents is such that the polymeric binder constituents are compatible and give a high quality primer coating. The following are examples of solvents that can be used to prepare the composition: methyl ethyl ketone, methyl amyl ketone, methyl isobutyl ketone, toluene, xylene, acetone, ethylene glycol monobutyl ether acetate and other esters, ethers, ketones and aliphatic and aromatic hydrocarbon solvents that are conventionally used. The proportion of solvents is not critical, since they primarily serve as the volatile vehicle to convey the solid material to the substrate to be coated. The solvent is preferably employed in an amount to provide a stable concentrate that can be shipped to assembly plants which is later reduced with solvent to a suitable spray viscosity for ease of application. In addition to the above ingredients, the composition may also include other conventional formulation additives such as toughening agents, and flow control agents, for example, such as Resiflow® S (polybutylacrylate), BYK® 320 and 325 (high molecular weight polyacrylates). Such additional additives will, of course, depend on the desired final properties of the coating composition, as will be apparent to those skilled in the art. In addition, conventional rheologically active agents, such as Garamite® clay, fumed silica, urea sag control agents, and the like can also be used, for enhanced intermixing resistance.

As indicated above, high solids primer compositions are generally preferred for use in the multi-layer coating process. The primer coating composition preferably has a total solids content (% non-volatile) of 40 to 70% by weight at the time of application, and preferably between 50 and 65% by weight, based on the total weight of the coating composition in order to keep air pollution to a minimum level. High solids coatings behave like low solids liquid coatings but have the additional benefit of lower solvent content and significantly reduced emissions. The volatile organic content or VOC level at such solids typically translates to less than 3.5 pounds of organic solvent per gallon of curable composition, as determined under the procedure provided in ASTM D3960.

It should be understood however, that additional solvent may be added, if necessary, at the time of application to adjust the spray viscosity and control the flow and leveling of the coating and provide other desirable properties, as will be apparent to those skilled in the art.

The primer composition can be applied to a plastic or metal substrate by conventional techniques such as spraying, electrostatic spraying, dipping, brushing, flowcoating and the like.

Base Coated Layer

In the method for forming the multi-layer coating film, a colored base coating material is employed for forming a base coated layer. The base coated layer forms a top coated film together with a clear coated layer which will be described later. This base coating composition contains a film forming resin, usually a curing agent, a color pigment and optionally an effect pigment, to impart a special visual effect such as sparkle, pearlescent, luminescent, and/or metallic appearance or an increased depth of color to the cured coating composition.

Any of the conventionally known basecoat compositions can be used. In general, the composition of the basecoat is not limited by the present invention. The base coating composition may be a solvent type or a water-borne type.

Examples of film forming resins contained in the base coating material include, but are not limited to, polyester resins, acrylic resins, alkyd resins, epoxy resins, urethane resins and the like, and resins may be employed alone or in combination. The film forming resin can be employed in combination with a curing agent. Examples of the typical curing agents include amino resins such as melamine formaldehyde condensates and/or blocked isocyanate resins.

An example of a typical high solids solvent borne basecoat, in addition to color pigments, optional aluminum flakes, and UV absorber, comprises by weight of composition, 10% microgel for rheology control, 21% melamine formaldehyde resin, 15% branched polyester resin, 5% hydroxy functional acrylic resin, 1% dodecyl benzyl sulfonic acid catalyst, and 40% solvent to disperse and/or dilute the above mentioned polymers and facilitate spray application.

Clear Coated Layer

For forming the clear coated layer, a clear coating composition is employed. The clear coating composition is not particularly restricted and may be a clear coating material which contains a film forming resin, a curing agent and the like. The clear coating material may be a solvent type, a water-borne type or a powder type.

High solids solvent borne clear coats which have low VOC (volatile organic content) and meet current pollution regulations are generally preferred. Typically useful solventborne clearcoats include but are not limited to 2K (two component) systems of polyol polymers crosslinked with isocyanate and 1 K systems of acrylic polyol crosslinked with melamine or 1 K acrylosilane systems in combination with polyol and melamine.

Suitable 1 K solvent borne acrylosilane clearcoat systems that can be used are disclosed in U.S. Patent 5,162,426, hereby incorporated by reference. Suitable 1 K solvent borne acrylic/melamine clearcoat systems are disclosed in U.S. Patent 4,591,533, hereby incorporated by reference.

Epoxy acid systems can also be used. Such finishes provide automobiles and trucks with a mirror-like exterior finish having an attractive aesthetic appearance, including high gloss and DOI (distinctness of image).

Substrate

The method for forming a coated film may be applied to bodies and parts of automobiles such as passenger cars, trucks, motorcycles and buses.

The metal substrates that are particularly preferred are those preliminarily subjected to forming treatment with phosphate salt, chromate salt or the like.

The substrate may have an electrodeposition coated film on the surface subjected to forming treatment. The electrodeposition coated film may be formed from an anionic or a cationic electrodeposition coating material. However, a cationic electrodeposition coating material is preferred since it provides excellent corrosion resistance.

Examples of plastic substrates that can be coated include polyester reinforced fiberglass, reaction-injection molded urethanes, partially crystalline polyamides, and the like or mixtures thereof, which may be primed or unprimed or otherwise treated as well prior to treating by the coating method described herein. These plastic substrates are oftentimes used in fabricating specific automotive body parts, such as fenders, bumpers, and/or trim parts.

Method for Forming Coated Film

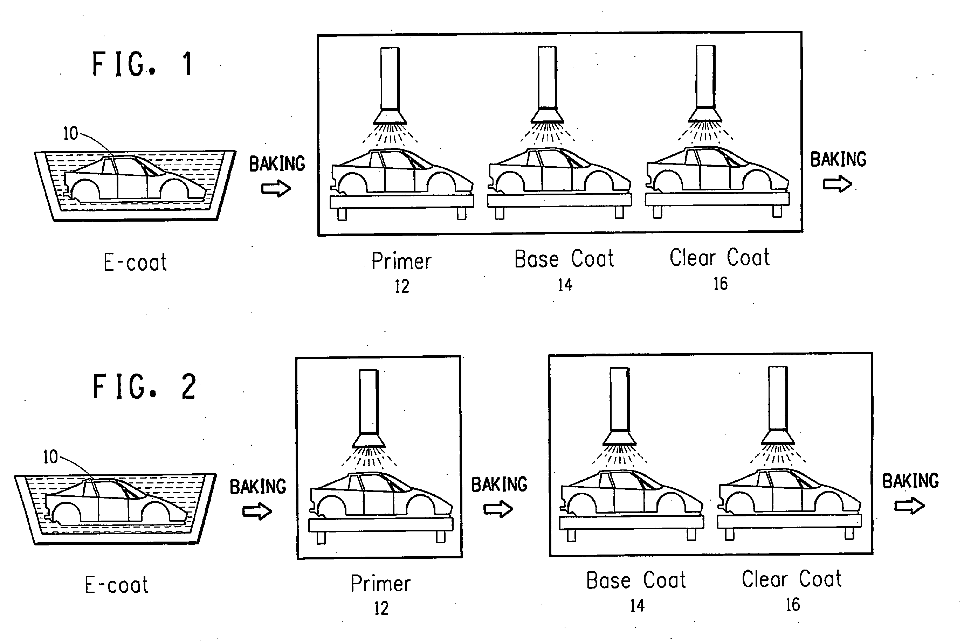

According to the method for forming a multi-layer coated film, as exemplified in FIG. 1, a primer coated layer 12 is formed on a substrate (automobile body 10 shown in FIG. 1) using the primer coating composition, then a base coated layer 14 is formed using the base coating material and a clear coated layer 16 is formed using the clear coating material in this order in the wet-on-wet manner.

When the three coating compositions described above are applied to automobile bodies, conventional coating methods such as spraying, electrostatic spraying, high speed rotational electrostatic bells, and the like, can be conducted. The preferred techniques for applying all three coatings are air atomized spraying with or without electrostatic enhancement, and high speed rotary atomizing electrostatic bells, since these techniques are typically employed in modern automobile and truck assembly plants.

When the primer coating material is applied to automotive bodies according to the present invention, any of the above techniques can be used.

The primer coating material forms a cured layer having a thickness of usually 0.3 to 2.5 mils (7 to 60 $\mu$m), preferably 0.5 to 1.5 mils (12 to 36 $\mu$m), but it may vary according to the intended use. If the thickness is more than the upper limit, image sharpness may deteriorate or a trouble such as unevenness or sagging may occur at the time of application. If it is less than the lower limit, the electro-primed substrate cannot be hidden, and film discontinuity may occur, which could expose the lower electrocoat layer to excess UV transmission and degradation.

On the uncured primer coated layer, a base coating material and a clear coating material are applied in the wet-on-wet manner to form a base coated layer and a clear coated layer.

The base coating material may be applied, like the primer coating material, using air-electrostatic spray coating or a rotary atomizing electrostatic bell so as to have a dry thickness of 0.4 to 1.2 mils (10 to 30 $\mu$m).

The clear coated material is then applied on the base coated layer, for the purpose of smoothing roughness or glittering which occurs due to the presence of luster color pigment and for protecting a surface of the base coated layer. The clear coated material may be applied, like the base coating material, using the rotary atomizing electrostatic bells.

The clear coated layer is preferably formed so as to have a dry thickness of 1.0 to 3.0 mils, (25-75 $\mu$m).

The multi-layered coated layers obtained as described above are then cured (i.e., baked) simultaneously, as shown in FIG. 1, to form a layered coated film. This is what we call "three-coat-one-bake method." This method requires no oven for drying the primer coated layer before being base coated (which is required in the conventional process shown in FIG. 2), and is favorable from the economical and the environmental viewpoint.

The three layered coated film is then cured in a curing oven at a curing temperature within the range of 100 to 180° C, preferably 130 to 160° C, so as to obtain a cured coated film with high crosslinking density. The curing time may vary depending on the curing temperature, however, a curing time of 10 to 30 minutes is adequate when the curing temperature is 130° C to 160° C.

The multi-layered coated film is formed so as to have a thickness of 3 to 5 mils (75 to 120 $\mu$m). It is important to have an adequate film build in each of the layers, as a low film build will affect the appearance, mechanical properties, and the amount of UV transmittance to the underlying layers. Too low a film build can allow UV radiation to penetrate to the electrocoated layer. Most electrocoat layers are not formulated with UV absorbers and they tend to be very susceptible to UV degradation.

The following examples further illustrate the present invention, however, these are not to be construed as limiting the present invention to their details. All parts and percentages are on a weight basis unless otherwise indicated. All molecular weights disclosed herein are determined by GPC (gel permeation chromatography) using polystyrene as the standard. Unless otherwise specified, all chemicals and reagents can be obtained from Aldrich Chemical Company, Milwaukee, WI.

## EXAMPLES

The following branched acrylic copolymers were prepared and then used to form the following three wet primer coating compositions.

## REFERENCE EXAMPLE 1

Preparation of High Mw Highly Branched Acrylic Polymer

To a 5-liter glass flask equipped with an agitator, thermometer, water condenser, nitrogen inlet and heating mantle was added 800 grams Solvesso 100. This mixture was agitated and heated to 163 °C (reflux). While maintaining the batch at reflux, a mixture of 360 grams 1,6-hexanediol diacrylate, 1340 grams isobornyl acrylate, 360 grams hydroxyethyl methacrylate, 20 grams t-butylperoxy acetate, 320 grams Solvesso 100 was added over a 300 minute period. Then the reaction mixture was held at reflux for an additional 60 minutes. The weight solids of the resulting polymer solution was 67.5% and the Gardner-Holdt viscosity (ASTM D1545-98) measured at 25 °C. was Z2. Weight average molecular weight of the polymer was 54,550 and polydispersity was 15, determined by GPC.

## REFERENCE EXAMPLE 2

Preparation of 3 Wet Primer Containing Polymer Above

A gray colored primer surfacer composition was prepared by mixing together the following ingredients in a suitable mixing vessel in order shown:

| Components | Parts by Weight |
| --- | --- |
| Carbon Black Pigment Dispersion [1] | 0.47 |
| White Pigment Dispersion[2] | 23.44 |
| Butyl Acetate[3] | 8.42 |
| Iso Propanol[4] | 5.42 |
| Acid Catalyst Solution[5] | 1.14 |
| Monomeric Melamine Formaldehyde (99.8% NV)[6] | 7.11 |
| Amorphous Silica Dispersion[7] | 10.00 |
| Hyperbranched Acrylic ( 68% NV )[8] | 44.00 |

(continued)

| Components | Parts by Weight |
|---|---|
| Total | 100.00 |

Table Footnotes

[1] 18% Solids of carbon black pigment dispersed in 19% solids of pigment dispersion agent in ester solvent.

[2] 68% Solids of titanium dioxide pigment dispersed in acrylic resin in ester solvent.

[3] Butyl acetate solvent.

[4] Isopropanol solvent.

[5] 48% of Nacure® XP-221, aromatic sulphonic acid, supplied by King Industries, Norwalk, Connecticut.

[6] Cymel® 1168 , monomeric melamine formaldehyde resin fully alkylated ( 50% methyl ; 50% isobutyl) supplied by Cytec Industries Inc., West Patterson, New Jersey.

[7] 9% Solids of Silica dispersion in acrylic resin solution and aromatic hydrocarbon solvent.

[8] Hyperbranched Acrylic from Reference Example 1.

The resulting 3 wet primer surfacer composition has a theoretical solid content of 60.8% and spray solids was 57% by weight reduced to 34 seconds with a No. 4 Ford cup using Solvesso® 100 as solvent.

## REFERENCE EXAMPLE 3 AND COMPARATIVE EXAMPLE

3Wet Coating Method Using 3 Wet Primer Prepared Above Compared to Conventional Baked Primer

Phosphated steel panels were coated in two different ways: (1) using 3 Wet coating method with primer prepared above (example 3); and (2) using a conventional primer baking process with the standard baking primer (comparative example) as a control.

In Example 3, the primer surfacer of Reference Example 2 was applied by spraying primer-surfacer onto a phosphatized steel panel coated with a cured cathodic epoxy resin based eletrodeposition primer (Cormax ® 6 ED from DuPont Company, Wilmington, DE) to get a film build of 23 microns. The primer surfacer layers and all following layers were applied using a 55 serrated bell cup. After primer surfacer application, the panels were allowed to air flash dry at room temperature for 3 minutes and this was followed by the application of Silver Birch solvent borne basecoat (commercial code 647-DP067 from Du Pont Company) in two coats to get a film build of 18 microns with flash off 3 minutes and followed by the application of acrylosilane clearcoat (Gen® 4 ES DuPont Company, Wilmington, DE) to get a film build of 40 microns and flashed dried for 10 minutes and baked for 30 minutes 140 °C on vertical and horizontal position for this study.

The 3 wet primer surfacer composition above was applied in comparison with commercial Titanium Frost 2 in 1 baking primer 708-DN079 (conventional polyester / melamine primer) from DuPont Company in Comparative Example 1 using a conventional process baking the primer between basecoat application for Comparative Example 1.

The test results are summarized in the Table below. In the Table, flop (i.e., metallic effect), adhesion, and chip, were tested according to the following procedures.

Flop - The flop values which measure the metallic effect of the finish were calculated from measurements determined by the X-Rite® machine from X-Rite Inc., which measures the brightness property of each panel from 15°, 45°, and 110° angles. An average of three readings is taken at each angle and the following formula is used to calculate the flop:

$$Flop=((L15^{\circ}-L110^{\circ})*10/L45^{\circ}).$$

Chip resistance and adhesion for the multilayer coatings produced above were also tested. The following test procedures were used.

Adhesion- the adhesion of 0 to 5 was determined in accordance with test method ASTM D3359 - a rating of at least 4B is an acceptable minimum.

Chip Resistance- which measures the ability of a coating system to resist physical damage from impact of a hard material most commonly stones or gravel which are thrown against the vehicle by the wheels of passing cars, or in the case of rocker panels thrown up against the car by the wheels of the same car - was determined utilizing a gravelometer and follows the procedure described in test method SAE J-400- a rating of at least 5 is an acceptable minimum.

**Table 1**

| Physical Properties of Panels Using DuPont 708 Line Primer Conventional Process versus 3 Wet Primer and 3 Wet Process | | | | | |
|---|---|---|---|---|---|
| Example | Primer | Process | Adhesion | Chip (SAE J400) | Flop |
| Comparative | 708DN079 | Conventional | 5 (No failure) | 5A | 18.58 |
| Reference Example 3 | 3 Wet Primer of Reference Example 2 | 3 Wet | 5 (No failure) | 4B | 18.27 |

In summary, the results indicated that an automotive quality appearance can be obtained using the primer coating composition in a three-coat-one-bake (i.e., 3 wet) process, having properties the same or similar to conventional baked primers applied by a conventional baking process.

**Claims**

1. Use of a primer coating composition in a method for forming a multi-layered coating film, which method comprises:

   (a) applying the primer coating composition on an automobile body;
   (b) applying a base coating material and a clear coating material in a wet-on-wet manner on the uncured primer coating layer to form a base coated layer and a clear coated layer; and
   (c) simultaneously curing the so obtained three-layered coated layers,

   wherein the primer coating composition comprises a film forming binder and an organic liquid carrier and optionally pigment(s) in a pigment to binder weight ratio of 1:100-150:100; and the binder contains:

   (1) 40 to 95% by weight, based on the weight of the binder, of a branched acrylic polymer having a hydroxyl monomer content of 1 to 65% by weight and a weight average molecular weight of 10,000 to 150,000; and
   (2) 5 to 60% by weight, based on the weight of the binder of a crosslinking agent selected from the group consisting of an aminoplast resin, a blocked polyisocyanate resin, or a mixture thereof, and

   wherein the following conditions are met:

   (i) the branched acrylic polymer is prepared by a solution polymerization method in which the monomers are blended with a liquid reaction medium and a free radical polymerization initiator, and heated to at least 130 °C for a sufficient time to form a branched polymer that is substantially free of crosslinking and that has a measurable intrinsic viscosity when dissolved in a suitable solvent for the polymer,
   (ii) the branched acrylic polymer is composed of at least two ethylenically unsaturated monomers at least one having said hydroxyl content and the other having no hydroxyl content,
   (iii) the branched acrylic polymer is composed of at least one monoacrylic monomer, at least one diacrylic or dimethacrylic monomer, and optionally additionally at least one monomethacrylic monomer, provided that the at least one monomethacrylic monomer does not exceed 40% by weight of the total reaction mixture, and
   (iv) the monomer mixture contains no more than 30% by weight diacrylic and/or dimethacrylic monomers in total.

2. The use according to claim 1, wherein the monoacrylic and monomethacrylic monomers include at least one bulky monomer in a proportion corresponding to 70% by weight of the monomer mixture, wherein the at least one bulky monomer is selected from the group consisting of isobornyl (meth)acrylate, butyl (meth)acrylates (all isomers), ethyl hexyl(meth)acrylate (all isomers), cyclohexyl (meth)acrylate, or a mixture of these monomers.

3. The use according to claim 1 wherein the branched acrylic polymer is composed of polymerized monomers of a first acrylate monomer which is either isobornyl acrylate, butyl acrylate (all isomers), ethyl hexyl acrylate (all isomers), or cyclohexyl acrylate, or mixture of these monomers, and a second methacrylate or acrylate monomer which is a hydroxy alkyl methacrylate or acrylate that has 1-4 carbon atoms in the alkyl group or a mixture of these monomers, and a diacrylate or dimethacrylate monomer or a mixture of these monomers.

4. The use according to claim 3 wherein the branched acrylic polymer contains about 40-98% by weight of the first acrylate, 1-30% by weight of the second acrylate or methacrylate, and 1-30% by weight of the diacrylate or dimethacrylate, wherein the weight percentages of the monomers in the polymer total 100%.

5. The use according to claim 1 in which the aminoplast resin is a partially or fully alkylated monomeric or polymeric melamine formaldehyde condensate.

6. The use according to claim 1 wherein the primer coating composition contains in addition 0.1-6% by weight, based on the weight of the binder, of a blocked acid catalyst.

7. The use according to claim 1 wherein the primer coating composition contains less than 1 % by weight, based on the weight of the composition, of particles of crosslinked nonaqueous dispersion resins and/or crosslinked microgel resins.

8. The use according to claim 1 wherein the primer coating composition has a total solids concentration of at least 40%.

9. The use according to claim 1, wherein said composition is a primer-surfacer beneath a composite basecoat/clearcoat finish.

**Patentansprüche**

1. Verwendung einer Grundierlackierungszusammensetzung bei einem Verfahren zum Bilden eines mehrschichtigen Lackierungsfilms, wobei das Verfahren Folgendes umfasst:

(a) das Aufbringen der Grundierlackierungszusammensetzung auf eine Karosserie;
(b) das Aufbringen eines Basislackierungsmaterials und eines Klarlackierungsmaterials im Nass-auf-Nass-Verfahren auf die unausgehärtete Grundierlackierungsschicht, um eine Basislackschicht und eine Klarlackschicht zu bilden; und
(c) das gleichzeitige Aushärten der so erhaltenen dreischichtigen Lackschichten,

wobei die Grundierlackierungszusammensetzung ein filmbildendes Bindemittel und einen organischen Flüssigkeitsträger, und wahlweise Pigment(e) in einem Gewichtsverhältnis von Pigment zu Bindemittel von 1:100 - 150:100 umfasst; und wobei das Bindemittel Folgendes enthält:

(1) 40 bis 95 Gew.-%, auf das Gewicht des Bindemittels bezogen, eines verzweigten Acrylpolymers, das einen Hydroxylmonomergehalt von 1 bis 65 Gew.-% und ein gewichtsdurchschnittliches Molekulargewicht von 10.000 bis 150.000 aufweist; und
(2) 5 bis 60 Gew.-%, auf das Gewicht des Bindemittels bezogen, eines Vernetzungsmittels ausgewählt aus der Gruppe bestehend aus einem Aminoplastharz, einem geblockten Polyisocyanatharz oder einer Mischung davon und
wobei die folgenden Bedingungen erfüllt sind:

(i) das verzweigte Acrylpolymer wird durch ein Lösungspolymerisationsverfahren hergestellt, wobei die Monomere mit einem flüssigen Reaktionsmedium und einem Polymerisationsinitiator für freie Radikale gemischt und auf mindestens 130 °C ausreichend lange erhitzt werden, um ein verzweigtes Polymer zu bilden, das im Wesentlichen von Vernetzungen frei ist und das eine messbare intrinsische Viskosität aufweist, wenn es in einem geeigneten Lösungsmittel für das Polymer gelöst ist,
(ii) das verzweigte Acrylpolymer besteht aus mindestens zwei ethylenisch ungesättigten Monomeren, von denen mindestens eines den o.g. Hydroxylgehalt und das andere keinen Hydroxylgehalt aufweist.
(iii) das verzweigte Acrylpolymer besteht aus mindestens einem Monoacrylmonomer, mindestens einem Diacryl- oder Dimethacrylmonomer und wahlweise zusätzlich mindestens einem Monomethacrylmonomer, vorausgesetzt, dass das mindestens eine Monomethacrylmonomer 40 Gew.-% der gesamten Reaktionsmischung nicht übersteigt und

(iv) die Monomermischung enthält nicht mehr als 30 Gew.-% Diacryl- und/oder Dimethacrylmonomer insgesamt.

2. Verwendung nach Anspruch 1, wobei die Monoacryl- und Monomethacrylmonomere mindestens ein voluminöses Monomer in einem Verhältnis, das 70 Gew.-% der Monomermischung entspricht, umfassen, wobei das mindestens eine voluminöse Monomer aus der Gruppe ausgewählt ist bestehend aus Isobomyl(meth)acrylat, Butyl(meth)acrylaten (alle Isomere), Ethylhexyl(meth)acrylat (alle Isomere), Cyclohexyl(meth)acrylat oder einer Mischung dieser Monomere.

3. Verwendung nach Anspruch 1, wobei das verzweigte Acrylpolymer aus polymerisierten Monomeren eines ersten Acrylatmonomers, das entweder Isobornylacrylat, Butylacrylat (alle Isomere), Ethylhexylmethacrylat (alle Isomere) oder Cyclohexylmethacrylat oder eine Mischungen dieser Monomere ist, und eines zweiten Methacrylat- oder Acrylatmonomers, das ein Hydroxyalkylmethacrylat oder -acrylat ist, das 1 - 4 Kohlenstoffatome in der Alkylgruppe aufweist, oder einer Mischung dieser Monomere und eines Diacrylat- oder Dimethacrylatmonomers oder einer Mischung dieser Monomere besteht.

4. Verwendung nach Anspruch 3, wobei das verzweigte Acrylpolymer etwa 40 - 98 Gew.-% des ersten Acrylats, 1 - 30 Gew.-% des zweiten Acrylats oder Methacrylats und 1 - 30 Gew.-% des Diacrylats oder Dimethacrylats enthält, wobei die Gewichtsprozentsätze der Monomere in dem Polymer insgesamt 100 % ausmachen.

5. Verwendung nach Anspruch 1, wobei das Aminoplastharz ein teilweise oder vollständig alkyliertes monomeres oder polymeres Melaminformaldehydkondensat ist.

6. Verwendung nach Anspruch 1, wobei die Grundierlackierungszusammensetzung zusätzlich 0,1 - 6 Gew.-%, auf das Gewicht des Bindemittels bezogen, eines blockierten sauren Katalysators enthält.

7. Verwendung nach Anspruch 1, wobei die Grundierlackierungszusammensetzung weniger als 1 Gew.-%, auf das Gewicht der Zusammensetzung bezogen, an Teilchen von vernetzten nichtwässrigen Dispersionsharzen und/oder vernetzten Mikrogelharzen enthält.

8. Verwendung nach Anspruch 1, wobei die Grundierlackierungszusammensetzung eine gesamte Feststoffkonzentration von mindestens 40 % aufweist.

9. Verwendung nach Anspruch 1, wobei die o.g. Zusammensetzung eine Grundierspachtelmasse unter einer Verbund-Basislack-/Klarlack-Decklackierung ist.

**Revendications**

1. Utilisation d'une composition de revêtement d'apprêt dans un procédé pour la formation d'un film de revêtement multicouche, lequel procédé comprend:

(a) l'application de la composition de revêtement d'apprêt sur une carrosserie d'automobile;
(b) l'application d'un matériau de revêtement de base et d'un matériau de revêtement clair d'une manière humide sur humide sur la couche de revêtement d'apprêt non durcie pour former une couche revêtue de base et une couche revêtue claire; et
(c) le durcissement simultané des couches revêtues à trois couches ainsi obtenues,

dans laquelle la composition de revêtement d'apprêt comprend un liant formant un film et un support liquide organique et éventuellement un ou des pigments dans un rapport en poids de pigment sur liant de 1:100-150:100; et le liant contient:

(1) de 40 à 95% en poids, sur la base du poids du liant, d'un polymère acrylique ramifié possédant une teneur en monomère d'hydroxyle de 1 à 65% en poids et un poids moléculaire moyen en poids de 10.000 à 150.000; et
(2) de 5 à 60% en poids, sur la base du poids du liant, d'un agent de réticulation choisi dans le groupe constitué d'une résine aminoplaste, d'une résine de polyisocyanate bloqué ou d'un mélange de celles-ci, et

dans laquelle les conditions suivantes sont satisfaites:

(i) le polymère acrylique ramifié est préparé par un procédé de polymérisation en solution, dans lequel les monomères sont mélangés avec un milieu de réaction liquide et un initiateur de polymérisation de radicaux libres, et chauffés à au moins 130°C pendant un temps suffisant pour former un polymère ramifié qui est substantiellement exempt de réticulation et qui possède une viscosité intrinsèque mesurable lorsqu'il est dissous dans un solvant approprié pour le polymère,

(ii) le polymère acrylique ramifié est composé d'au moins deux monomères éthyléniquement insaturés, au moins un possédant ladite teneur en hydroxyle et l'autre ne contenant pas d'hydroxyle,

(iii) le polymère acrylique ramifié est composé d'au moins un monomère monoacrylique, d'au moins un monomère diacrylique ou diméthacrylique et éventuellement en outre d'au moins un monomère monométhacrylique, à condition que le au moins un monomère monométhacrylique ne dépasse pas 40% en poids du mélange de réaction total, et

(iv) le mélange de monomères ne contient pas plus de 30% en poids de monomères diacryliques et/ou diméthacryliques au total.

**2.** Utilisation selon la revendication 1, dans laquelle les monomères monoacryliques et monométhacryliques incluent au moins un monomère à encombrement stérique dans une proportion correspondant à 70% en poids du mélange de monomères, dans laquelle le au moins un monomère à encombrement stérique est choisi dans le groupe constitué de (méth)acrylate d'isobomyle, de (méth)acrylates de butyle (tous les isomères), de (méth)acrylate d'éthylhexyle (tous les isomères), de (méth)acrylate de cyclohexyle ou d'un mélange de ces monomères.

**3.** Utilisation selon la revendication 1, dans laquelle le polymère acrylique ramifié est composé de monomères polymérisés d'un premier monomère d'acrylate qui est l'un ou l'autre parmi un acrylate d'isobornyle, un acrylate de butyle (tous les isomères), un acrylate d'éthylhexyle (tous les isomères) ou un acrylate de cyclohexyle ou un mélange de ces monomères, et d'un deuxième monomère de méthacrylate ou d'acrylate qui est un méthacrylate ou un acrylate d'hydroxyalkyle qui possède 1-4 atomes de carbone dans le groupe alkyle ou un mélange de ces monomères, et d'un monomère de diacrylate ou de diméthacrylate ou un mélange de ces monomères.

**4.** Utilisation selon la revendication 3, dans laquelle le polymère acrylique ramifié contient environ 40-98% en poids du premier acrylate, 1-30% en poids du deuxième acrylate ou méthacrylate et 1-30% en poids du diacrylate ou du diméthacrylate, dans laquelle les pourcentages en poids des monomères dans le polymère totalisent 100%.

**5.** Utilisation selon la revendication 1, dans laquelle la résine aminoplaste est un condensé de mélamine-formaldéhyde monomère ou polymère partiellement ou totalement alkylé.

**6.** Utilisation selon la revendication 1, dans laquelle la composition de revêtement d'apprêt contient en outre 0,1-6% en poids, sur la base du poids du liant, d'un catalyseur d'acide bloqué.

**7.** Utilisation selon la revendication 1, dans laquelle la composition de revêtement d'apprêt contient moins de 1% en poids, sur la base du poids de la composition, de particules de résines en dispersion non- aqueuses réticulées et/ou de résines de microgels réticulés.

**8.** Utilisation selon la revendication 1, dans laquelle la composition de revêtement d'apprêt possède une concentration totale de solides d'au moins 40%.

**9.** Utilisation selon la revendication 1, dans laquelle ladite composition est un apprêt-surfaçant en dessous d'une finition composite de couche de base/couche claire.

## FIG. 1

E-coat

BAKING

Primer 12

Base Coat 14

Clear Coat 16

BAKING

## FIG. 2

E-coat

BAKING

Primer 12

BAKING

Base Coat 14

Clear Coat 16

BAKING

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6863929 B, Watanabe
- EP 0893483 A2
- US 20050161330 A1
- EP 0158161 A1
- EP 0285034 A1
- US 5162426 A
- US 4591533 A

**Non-patent literature cited in the description**

- **PECK ; GRADY.** *Polym. Preprints,* 2002, vol. 43 (2), 154